Europäisches Patentamt

European Patent Office

Office européen des brevets

(11) Veröffentlichungsnummer: **0 479 019 A2**

## EUROPÄISCHE PATENTANMELDUNG

(21) Anmeldenummer: **91115655.2**

(22) Anmeldetag: **16.09.91**

(51) Int. Cl.5: **G01M 11/00**

(30) Priorität: **04.10.90 DE 4031452**

(43) Veröffentlichungstag der Anmeldung:
**08.04.92 Patentblatt 92/15**

(84) Benannte Vertragsstaaten:
**AT BE CH DE FR GB IT LI NL SE**

(71) Anmelder: **SIEMENS AKTIENGESELLSCHAFT
Wittelsbacherplatz 2
W-8000 München 2(DE)**

(72) Erfinder: **Lieber, Winfried, Dr.-Ing.
Alpenstrasse 21
W-8033 Krailling(DE)**
Erfinder: **Loch, Manfred, Dr.-Ing.
Newhamstrasse 25
W-6750 Kaiserslautern(DE)**

(54) **Messvorrichtung für ein optisches Medium.**

(57) Den beiden Sendern (SE1, SE2), die ortsfest mit Abstand voneinander an der Meßvorrichtung (MV) angebracht sind, ist ein einziger gemeinsamer Empfänger (E12) zugeordnet. Dieser gemeinsame Empfänger (E12) ist mittels einer mechanischen Verschiebeführung (AR) derart an der Meßvorrichtung (MV) gehalten, daß er wahlweise örtlich jeweils einem der beiden Sender (SE1, SE2) zuordenbar ist.

EP 0 479 019 A2

Die Erfindung betrifft eine Meßvorrichtung für ein optisches Medium unter Verwendung Zweier Sender, die zu beiden Seiten an das optische Medium ankoppelbar sind.

Eine Meßvorrichtung dieser Art ist in der DE-OS 38 28 604 und der US-PS 4 652 123 beschrieben, wobei das Meßprinzip nachfolgend nochmals anhand von Fig. 1 kurz erläutert wird.

Ein optisches Medium OM, z.B. in Form einer Spleißstelle, eines Kopplers, eines Lichtwellenleiters größerer Länge, eines Lichtwellenleiterkabels oder eines sonstigen passiven optischen Bauelementes soll in seinen Übertragungseigenschaften gemessen werden, wobei insbesondere die Dämpfung von Interesse ist. Hierzu sind zwei optische Sender SE1 und SE2 vorgesehen, die zu beiden Seiten des optischen Mediums (Meßobjektes) OM angeordnet sind und über Lichtwellenleiter LW1 und LW2 mit diesem optischen Medium in Verbindung stehen. Wenn das optische Medium selbst bereits ein Lichtwellenleiter ist bzw. einen solchen enthält, können natürlich die jeweiligen Lichtwellenleiterenden des optischen Mediums als Lichtwellenleiter LW1 und LW2 direkt mit verwendet werden. Zu beiden Seiten des optischen Mediums OM ist jeweils ein Empfänger EM1 und EM2 dargestellt, wobei diese Empfänger so ausgebildet sind, daß sie sowohl Signale vom Sender SE1 als auch vom Sender SE2 aufnehmen können. Die Meßvorgänge laufen im einzelnen folgendermaßen ab:

Sender SE1 aktiviert: Ausgangsleistung P100

    a) Empfänger EM1 angekoppelt: Messung des Empfangspegels P101
    b) Empfänger EM2 angekoppelt: Messung des Empfangspegels P102

Sender SE2 aktiviert: Ausgangsleistung P200

    a) Empfänger EM1 angekoppelt: Messung des Empfangspegels P201
    b) Empfänger EM2 angekoppelt: Messung des Empfangspegels P202

Aus diesen so erhaltenen Meßwerten P101, P102, P201 und P202 läßt sich in der in der DE-OS 38 28 604 näher beschriebenen Weise die Dämpfung des optischen Mediums OM in exakter Weise bestimmen. Im einzelnen erfolgt die Ankopplung der jeweiligen Meßsender SE1 und SE2 entweder über optische Koppler oder diese Sender sind, wenn es sich nicht um eine durchgehende Leitung handelt, direkt an das stirnseitige Ende der Lichtwellenleiter LW1 und LW2 angeschlossen. Dagegen werden die Empfänger EM1 und EM2 stets über Koppler, bevorzugt Biegekoppler an die Lichtwellenleiter LW1 und LW2 angeschlossen.

Die Verwendung zweier Empfänger für die Durchführung der Messung ist relativ aufwendig. Der Erfindung liegt daher die Aufgabe zugrunde, einen Weg aufzuzeigen, wie in einfacher Weise mit einem geringerem Aufwand mit nur einem Meßempfänger gearbeitet werden kann, wobei die Meßgenauigkeit nicht beeinträchtigt und gleichzeitig eine einfache Handhabung durch die Bedienungsperson gewährleistet werden soll.

Gemäß der Erfindung, welche sich auf eine Meßvorrichtung der eingangs genannten Art bezieht, wird diese Aufgabe dadurch gelöst, daß die beiden Sender mit Abstand voneinander an der Meßvorrichtung angebracht sind, daß ein beiden Sendern zugeordneter gemeinsamer Empfänger vorgesehen ist und daß der gemeinsame Empfänger mittels einer mechanischen Verschiebeführung derart an der Meßvorrichtung gehalten ist, daß er wahlweise örtlich jeweils einem der beiden Sender zuordenbar ist.

Die ortsfeste Anordnung der beiden Sender in der Meßvorrichtung hat den Vorteil, daß die notwendige, frei zugängliche Faserlänge eindeutig festgelegt ist. Da mit nur mit einem einzigen gemeinsamen Empfänger gearbeitet wird, ist der Aufwand auf der Empfängerseite auf ein Minimum reduziert. Durch die mechanische Verschiebeführung wird gewährleistet, daß der Empfänger stets bei dem jeweiligen Meßvorgang genau in die gewünschte Position gelangt, so daß die Messung selbst auch bei vielen aufeinanderfolgenden Meßvorgängen stehts etwa am gleichen Ort und in der gleichen Art und Weise beiderseits des optischen Mediums durchgeführt werden kann. Die Verschiebeführung selbst kann durch die Bedienungsperson in die jeweiligen Endposition gebracht werden oder aber automatisch z.B. durch Stellmotoren oder dergleichen.

Ein Vorteil mit sehr hohem Stellenwert ist, daß der Empfänger nicht mehr symmetrisch sein muß. (Eine Unsymmetrie, laut den Definitionen der DE-OS 38 28 604, $C_{12}/C_{11} \cdot C_{21}/C_{22} \neq 1$, muß bei zwei Empfängern gemessen und korrigiert werden. Bei der Lösung mit nur einem Empfänger aber ergibt sich immer $C_{12}/C_{11} = C_{21}/C_{22}$ da $C_{12} = C_{21}$ und $C_{11} = C_{22}$ ist.

Weiterbildungen der Erfindung sind in den Unteransprüchen wiedergegeben.

Die Erfindung und ihre Weiterbildungen werden nachfolgend anhand von Zeichnungen näher erläutert.

Es zeigen:

    Fig. 2    in schematischer Darstellung eine Meßvorrichtung gemäß der Erfindung in Draufsicht,

    Fig. 3    die Meßvorrichtung nach Fig. 2 in Seitenansicht,

    Fig. 4    konstruktive Einzelheiten der Koppeleinrichtung des Empfängers im Schnitt,

Fig. 5    die Koppelinrichtung für den Empfänger in Seitenansicht,

Fig. 6    eine Koppeleinrichtung mit einer Nut und

Fig. 7    die Anordnung eines Modenabstreifers.

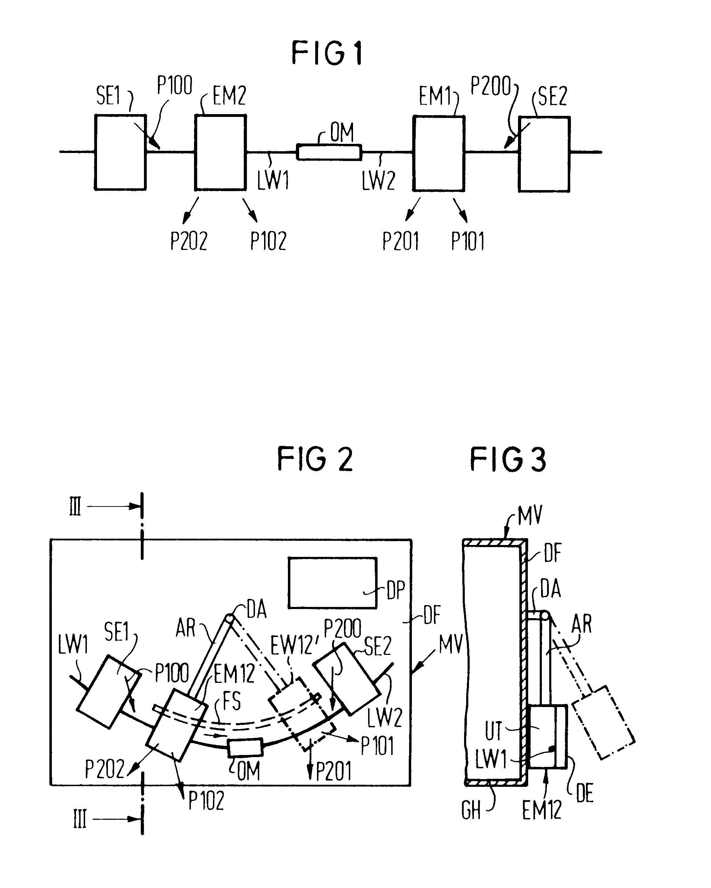

Die Meßvorrichtung MV nach Fig. 2 und 3 besteht aus einem Gehäuse GH, in dem alle für die Durchführung der Messungen notwendigen (hier nicht näher dargestellten) Bauteile untergebracht sind. Auf der Deckfläche DF (Bedienungsfläche) ist mindestens eine Anzeigeeinrichtung DP vorgesehen, durch welche das jeweils erzielte Meßergebnis dargestellt wird.

Zusätzlich kann natürlich auch eine Ausgabe auf Drucker oder dergleichen erfolgen. Auf der Oberseite der Deckfläche DF der Meßvorrichtung MV sind die beiden Sender SE1 und SE2 mit Abstand voneinander angeordnet und vorzugsweise ortsfest angebracht. Jeder dieser Sender SE1 und SE2 ist in einem blockförmigen Körper (Modul-Baustein) untergebracht, der auf der Deckfläche DF angeordnet ist. Die Verbindung nach hinten zu dem Gehäuse GH erfolgt über Steckeinrichtungen. Auf diese Weise ist es möglich, die Sender als Modul-Bausteine auszubilden und bei Bedarf auszuwechseln.

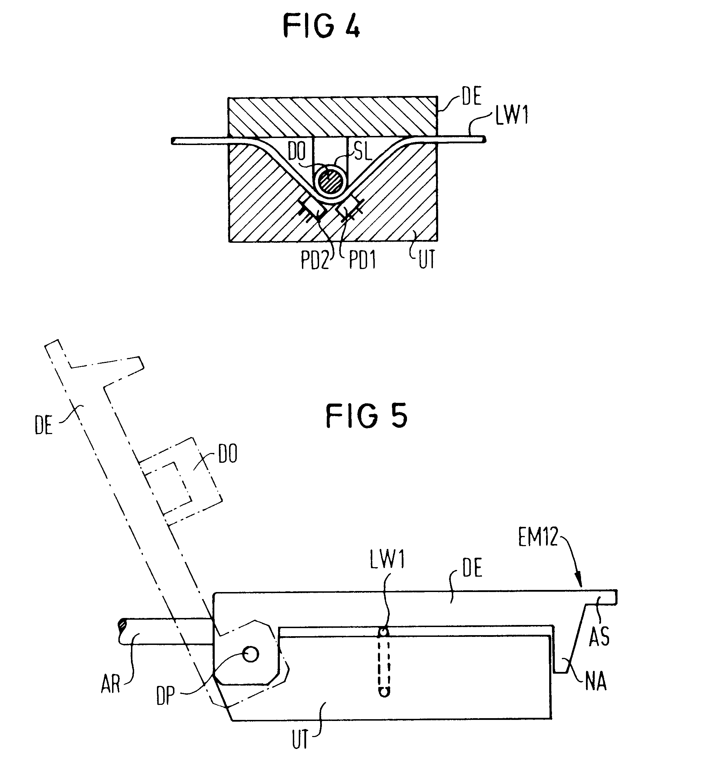

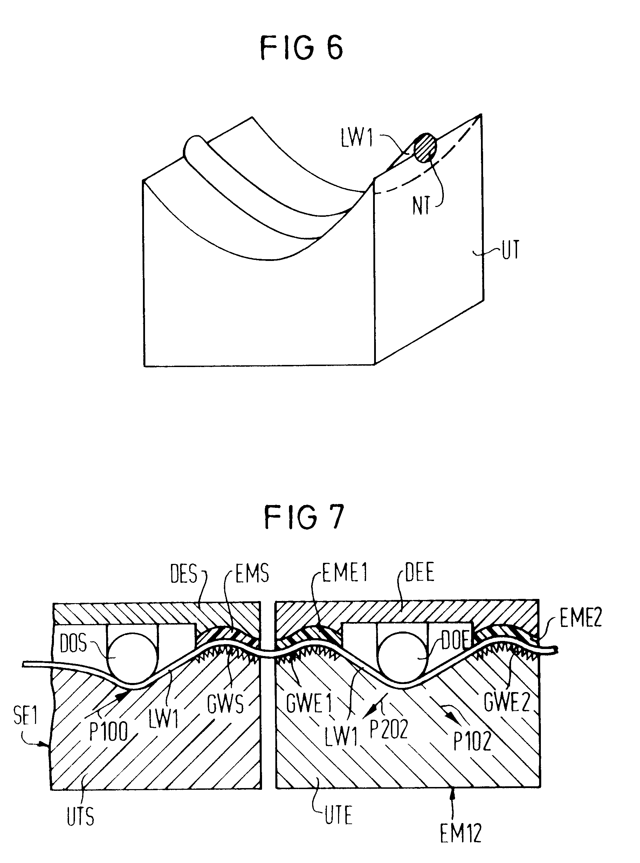

Im einzelnen erfolgt im vorliegenden Ausführungsbeispiel die Ankopplung der Sender SE1 und SE2 mit Biegekopplern, wobei für jeden Sender ein Unterteil und ein in Form eines Deckels oder einer Klappe ausgebildetes Oberteil vorgesehen ist. Auch der Empfänger EM12 ist als Modul-Baustein ausgebildet und mit einem Deckel oder einer Klappe versehen, um das Einlegen des Lichtwellenleiters zu ermöglichen. Einzelheiten über die konstruktive Gestaltung werden näher anhand der Figuren 4 und 5 erläutert.

Im Meßzustand sind sowohl beim Sender SE1 als auch beim Sender SE2 die jeweiligen Lichtwellenleiter LW1 und LW2 eingelegt und die entsprechenden Deckel geschlossen. Beide Sender sind somit über die Biegekoppler an die Lichtwellenleiter LW1 bzw. LW2 angekoppelt, wobei es für die eigentliche Messung zwei Betriebsmöglichkeiten gibt:

a) Die beiden Sender SE1 und SE2 werden nacheinander aktiviert, d.h. zunächst wird der Sender SE1 eingeschaltet und dadurch über die bereits bestehende Biegekopplung ein Signal P100 in den Lichtwellenleiter LW1 eingespeist. Aus diesem Signal P100 leitet der Empfänger EM12 das Signal P102 ab, wobei im vorliegenden Beispiel nach Fig. 2 angenommen ist, daß der Empfänger links von dem optischen Meßobjekt OM liegt, also in der Nähe des Senders SE1. Nach der Durchführung der Messung mit dem Signal P100 des Senders SE1 wird dieser deaktiviert und dafür der Sender SE2 eingeschaltet. Über die bereits bestehende Biegekopplung wird von diesem Sender das Meßsignal P200 in den Lichtwellenleiter LW2 eingespeist und gelangt über das optische Meßobjekt OM zum Empfänger EM12, welcher aus dem Sendesignal P200 das Meßsignal P202 erzeugt.

b) Es ist auch möglich von beiden Sendern SE1 und SE2 gleichzeitig Sendesignale in die jeweiligen Lichtwellenleiter LW1 und LW2 über die Biegekoppler einzuspeisen. Hierzu können beispielsweise die beiden Sender SE1 und SE2 mit unterschiedlichen Frequenzbereichen ihrer Meßsignale arbeiten, so daß die Meßsignale P102 und P202 des Emfpängers EM12 voneinander getrennt und unabhängig voneinander ausgewertet werden können.

Nach der Durchführung der Messung mit dem Empfänger EM12 auf der Seite links vom optischen Meßobjekt OM erfolgt eine zweite Messung. Hierzu wird der Empfänger EM12 in die gestrichelt dargestellte Position EM12' gebracht, welche rechts vom optischen Meßobjekt OM liegt und an den Sender SE2 angenähert ist. Aus dem Sendesignal P100 des Senders SE1 wird vom Empfänger in der Position EM12' das Empfangssignal P101 hergeleitet, während aus dem Sendesignal P200 des Senders SE2 das Empfangssignal P201 gewonnen wird. Aus diesem vier insgesamt erhaltenen Meßwerten P102, P202 und P101, P201 des gemeinsamen Empfängers EM12 läßt sich in der in der DE-OS 38 28 604 beschriebenen Weise die Dämpfung des optischen Meßobjektes OM ermitteln.

Die Einkoppelbedingungen während der gesamten Meßzeit, d.h. während der Messung links und rechts vom optischen Meßobjekt OM müssen für die Sender SE1 und SE2 gleich gehalten werden. Deswegen bleiben die Lichtwellenleiter LW1 und LW2 bei geschlossenem Deckel bzw. Klappe in den Koppeleinrichtungen dieser Sender liegen und damit ist die Biegekopplung in beiden Fällen unverändert, auch wenn der Empfänger EM12 in die Position EM12' verschoben wird. Zwar wird um diese Verschiebung durchführen zu können, beim Empfänger EM12 die Klappe bzw. der Deckel geöffnet, um die mechanische Verschiebung durchzuführen; dies hat jedoch keinen Einfluß, weil die Wertepaare P202 und P102 auf der linken Seite und P101 und P201 auf der rechten Seite jeweils bei den gleichen Koppelbedingungen gewonnen werden, da eine Öffnung des Deckels von einem Meßvorgang, z.B. P102 zum nächsten Meßvorgang P202 nicht erfolgt.

Für die Bewegung des gemeinsamen Empfängers EM12 in die beiden Arbeitspositionen ist eine Verschiebeführung vorgesehen, die im vorliegenden Fall in Form eines Armes AR ausgebildet ist, der um eine Drehachse DA schwenkbar ist. Der Arm AR kann auch ganz oder ggf. teilweise versenkt im Inneren des Gehäuses GH (d.h. unter der Deckfläche DF versenkt) angeordnet sein und enthält in seinem Inneren die Anschlußleitungen für den Empfänger EM12. Die Bewegung des Empfängers EM12 erfolgt somit auf einer Kreisbahn und es ist deshalb zweckmäßig, auch die beiden Sender SE1 und SE2 so anzuordnen, daß sie quer (radial) zur Bewegungsbahn des Empfängers EM12 liegen, also im vorliegenden Beispiel quer zu einem Kreis mit dem gemeinsamen Mittelpunkt in DA. Dies hat den besonderen Vorteil, daß dann in den beiden Meßpositionen die Sender SE1 und SE2 jeweils etwa parallel zu dem Empfänger EM12 verlaufen, so daß die Lichtwellenleiter LW1 und LW2 keine Knickung erfahren sondern ebenfalls auf einer etwa kreisbogenförmigen Linie zu liegen kommen.

Anstelle eines Führungsarmes AR kann auch jede andere mechanische Führung des gemeinsamen Empfängers verwendet werden, z.B. eine Führung auf mindestens einer Schiene (angedeutet in Fig. 2 durch die gestrichelte Führungsschiene FS), eine Kulissenführung oder dergleichen.

Es ist zweckmäßig die Koppeleinrichtungen der beiden Sender SE1 und SE2 jeweils fluchtend zu der Koppeleinrichtung des gemeinsamen Empfängers EM12 anzuordnen und zwar bezogen auf die jeweilige endgültige Meßposition wie sie in Fig. 2 links für den Empfänger EM12 und rechts für die Position EM12' dargestellt ist. In der Endposition (Meßposition) des gemeinsamen Empfängers EM12 verläuft also der jeweilige Lichtwellenleiter LW1 und LW2 auf einer gleichförmigen, stetigen Bahn, die keine scharfen Knickungen oder dergleichen aufweist.

Auch die Höhe der Ein- und Austrittstelle der Lichtwellenleiter oberhalb der Deckfläche DE der Meßvorrichtung MV ist zweckmäßig so zu wählen, daß die Lichtwellenleiter LW1 und LW2 im gleichen Abstand verlaufen, d.h. die Eintrittsstellen und die Austrittsstellen an den einander zugekehrten Seiten der Sender SE1 und SE2 und des gemeinsamen Empfängers EM12 liegen in der gleichen Höhe über der Deckfläche DE.

Fig. 3 zeigt einen Schnitt durch die Meßvorrichtung MV nach Fig. 2 längs der Linie $\overline{A}A$. Der Empfänger EM12 ist in seiner (dem Sender SE1 zugeordneten) Empfangsposition und liegt auf der Deckfläche DE auf. Der Empfänger EM12 weist ein Unterteil UT und einen Deckel DE auf, wobei letzterer im geschlossenen Zustand gezeichnet ist und deswegen den Lichtwellenleiter LW1 in der Einführungsöffnung festhält.

Wenn das optische Medium OM auf der Deckfläche DF der Meßvorrichtung MV aufliegt bzw. befestigt ist (dies kann z.B. dann der Fall sein, wenn OM eine Spleißstelle darstellt und beiderseits von OM noch die Elektroden einer LWL-Schweißeinrichtung vorhanden sind), dann ist es zweckmäßig, den Arm AR an dem Dreharm DA noch in vertikaler Richtung schwenkbar zu lagern, so daß das optische Medium OM beim Übergang von der in Fig. 2 gezeigten Position in die gestrichelte Position EM12 über das optische Medium OM nach oben hinweg geführt werden kann. Die bei diesem Übergang vom Empfänger EM12 und dem Arm AR eingenommene Position ist in Fig. 3 gestrichelt dargestellt.

Es kann zweckmäßig sein auch die Sender SE1 und SE2 in einem gewissen Umfang beweglich auf der Deckfläche DF der Meßvorrichtung MV anzuordnen, wobei normalerweise aber allenfalls eine gewisse Drehung um ein Drehpunkt ausreicht. Ein Verschwanken wie beim Empfänger EM12 ist nicht notwendig.

In Fig. 4 ist ein Schnitt durch einen Empfänger EM12 dargestellt, wobei die Schnittebene genau dort liegt wo der jeweilige Lichtwellenleiter, z.B. LW1 verläuft. Das Unterteil UT weist im mittleren Bereich eine Vertiefung auf, an deren unterem Ende die zur Aufnahme der Empfangssignale dienenden Sensoren, also insbesondere Fotodioden PD1 und PD2 angeordnet sind. Die Fotodiode PD2 nimmt Signale auf, die von rechts kommen, während die Fotodiode PD1 Signale empfängt die von links über den Lichtwellenleiter LW1 eintreffen. An der Unterseite des im geschlossenen Zustand dargestellten Deckels DE ist ein Dorn DE mit vorzugsweise kreisförmigen Querschnitt angedeutet, welcher den Lichtwellenleiter LW1 in der Meßposition genau in die Vertiefung des Unterteils UT hineindrückt und dadurch eine definierte Auskopplung eines Teils der Sendesignale P100 oder P200 der Sender SE1 oder SE2 gewährleistet.

Der Deckel DE greift, wie aus Fig. 5 ersichtlich ist, mit einer Nase NA über das Unterteil UT hinweg und weist einen Ansatz AS auf, über den die Bedienungsperson das Öffnen und Schließen in einfacher Weise bewirken kann. Der Deckel DE ist am linken Ende über eine Achse DP drehbar gelagert und kann zum Einlegen bzw. Entfernen des Lichtwellenleiters LW1 in die gestrichelt dargestellte Position gebracht werden. Wie bereits erwähnt, weisen zweckmäßig die Ankoppeleinrichtungen der beiden Sender SE1 und SE2 den gleichen äußeren Aufbau auf, so daß insgesamt drei entsprechende Koppelvorrichtungen in gleicher Bauart und gleicher Betriebsweise für die Bedienungsperson zur Verfügung stehen.

Eine Verbesserung der Führung des Lichtwellenleiters, z.B. LW1 im Unterteil UT wird entsprechend Fig. 6 durch eine Nut NT erreicht, welche in die gebogene obere Deckfläche des Unterteils UT eingearbeitet ist. Die Tiefe dieser Nut NT wird so gewählt, daß der Lichtwellenleiter nach oben ein entsprechendes Stück über die Nut herausragt, so daß der Dorn DO nach Fig. 4 entsprechend auf dem Lichtwellenleiter LW1 aufliegt. Der Dorn DO mit kreisförmigen Querschnitt kann vorteilhaft mit einem Schlauch SL überzogen sein (vgl. Fig. 4), der aus einem elastisch nachgiebigen Material besteht, insbesondere aus Silikon. Anstelle eines Schlauches SL kann auch eine Beschichtung des Dornes mit einem entsprechenden Schichtmaterial, z.B. einem Kunstharz bzw. Silikon erfolgen. Das Zusammenspiel der Nut NT und des Schlauches SL auf dem Dorn DO sichert eine besonders gut reproduzierbare Lage des Lichtwellenleiters LW1 in der Koppeleinrichtung. Dabei ist zu beachten, daß der Lichtwellenleiter LW1 noch mit seinem Coating versehen ist, so daß also auf dem Coating des Lichtwellenleiters LW1 das Material des Schlauches SL des Dornes DO aufliegt. Ein Fließen der Beschichtung (d.h. des Coatings) des Lichtwellenleiters LW1 unter dem Druck des Dornes DO wird durch die vergrößerte Auflagefläche des Lichtwellenleiters LW1 in dem Grund der Nut NT zumindest im gewissen Umfang reduziert bzw. vermieden. Dies gilt insbesondere im Vergleich zu Ausführungsformen, bei denen der runde Lichtwellenleiter LW1 nur auf einer Seite (gewissermaßen tangential) an einer Unterlage z.B. UT aufliegt und auf der gegenüberliegenden Seite ebenfalls nur praktisch tangential mit der Oberfläche des Dornes DO in Berührung kommt.

Eine weitere Verbesserung der Meßgenauigkeit ist durch den Einsatz eines Moden-Abstreifers in den Einkoppel- bzw. Auskoppeleinrichtungen der Sender SE1 und SE2 und des gemeinsamen Empfängers EM12 möglich. Hierzu wird entsprechend dem linken Teil der Fig. 7 beim Sender SE1 bzw. SE2 nach dem Biegekoppler (bestehend aus Dorn DOS und Unterteil UTS) eine gewellte Führung des Lichtwellenleiters LW1 vorgenommen. Hierzu ist ausgangsseitig eine gewellte Oberfläche GWS des Unterteils UTS vorgesehen, wobei der zugehörige Deckel DES der Sende-Ankoppeleinheit mit einem elastischen Material EMS beschichtet ist. Beim Schließen des Deckels DES wird der Lichtwellenleiter LW1 durch die gewellte Führung GWS so verformt, daß es zu einer Abstreifung vom Mantelmode kommt, die andernfalls eine Verfälschung des Meßergebnisses bewirken würden.

Es ist zweckmäßig, auch beim Empfänger EM12 eine derartige gewellte Führung GWE1 und GWE2 vorzusehen und zwar beiderseits der Koppeleinrichtung bzw. des Dornes DOE, wobei auch zwei Lagen EME1 und EME2 von elastischem Material vorgesehen sind.

**Patentansprüche**

1. Meßvorrichtung für ein optisches Medium (OM) unter Verwendung zweier Sender (SE1, SE2), die zu beiden Seiten an das optische Medium (OM) ankoppelbar sind,
   **dadurch gekennzeichnet,**
   daß die beiden Sender (SE1, SE2) mit Abstand voneinander an der Meßvorrichtung (MV) angebracht sind,
   daß ein beiden Sendern (SE1, SE2) zugeordneter gemeinsamer Empfänger (E12) vorgesehen ist und
   daß der gemeinsame Empfänger (E12) mittels einer mechanischen Verschiebeführung derart an der Meßvorrichtung (MV) gehalten ist, daß er wahlweise örtlich jeweils einem der beiden Sender (SE1, SE2) zuordenbar ist.

2. Meßvorrichtung nach Anspruch 1,
   **dadurch gekennzeichnet,**
   daß in der jeweiligen Meßposition der gemeinsame Empfänger (EM12) etwa parallel zu dem jeweiligen Sender (SE1, SE2) verläuft.

3. Meßvorrichtung nach einem der vorhergehenden Ansprüche,
   **dadurch gekennzeichnet,**
   daß die Ankopplung der Meßsender (SE1, SE2) und des gemeinsamen Empfängers (EM12) an das optische Medium (OM) über Lichtwellenleiter (LW1, LW2) erfolgt.

4. Meßvorrichtung nach Anspruch 3,
   **dadurch gekennzeichnet,**
   daß die Lage der Koppler der Meßsender (SE1, SE2) und des gemeinsamen Empfängers (EM12) so gewählt ist, daß die Lichtwellenleiter (LW1, LW2) einen durchgehenden, etwa stetigen Verlauf aufweisen.

5. Meßvorrichtung nach einem der vorhergehenden Ansprüche,
   **dadurch gekennzeichnet,**
   daß die Verschiebeführung in Form eines Armes (AR) ausgebildet ist, die um eine Drehachse (DA) schwenkbar an der Meßvorrichtung gehalten ist.

6. Meßvorrichtung nach einem der Ansprüche 1-5,
   **dadurch gekennzeichnet,**
   daß die Verschiebeführung in Form mindestens einer Schiene ausgebildet ist, auf welcher der gemeinsame Empfänger (EM12) beweglich geführt ist.

7. Meßvorrichtung nach einem der vorhergehenden Ansprüche,
   **dadurch gekennzeichnet,**

daß die Verschiebeführung so ausgebildet ist, daß sie auch ein Anheben des gemeinsamen Empfängers (EM12) zuläßt (Fig. 3).

8. Meßvorrichtung nach einem der vorhergehenden Ansprüche,
   **dadurch gekennzeichnet**,
   daß der gemeinsame Empfänger (EM12) in der jeweiligen Meßposition auf der Meßvorrichtung (MV) aufliegt.

9. Meßvorrichtung nach einem der vorhergehenden Ansprüche,
   **dadurch gekennzeichnet**,
   daß der gemeinsame Empfänger (EM12) ein Unterteil (UT) und einen Deckel (DE) aufweist, derart, daß bei geschlossenem Deckel die angekoppelte Position eingestellt ist.

10. Meßvorrichtung nach einem der vorhergehenden Ansprüche,
    **dadurch gekennzeichnet**,
    daß die beiden Sender (SE1, SE2) und der gemeinsame Empfänger (EM12) die gleichen Koppeleinrichtungen aufweisen.

11. Meßvorrichtung nach einem der vorhergehenden Ansprüche,
    **dadurch gekennzeichnet**,
    daß in der jeweiligen Koppeleinrichtung eine Nut (NT) für die Aufnahme des Lichtwellenleiters (z.B. LW1) vorgesehen ist (Fig. 6).

12. Meßvorrichtung nach einem der vorhergehenden Ansprüche,
    **dadurch gekennzeichnet**,
    daß im Bereich der Koppeleinrichtungen Modenabstreifer vorgesehen sind (Fig. 7).

# FIG 1

# FIG 2

# FIG 3

EP 0 479 019 A2

# FIG 4

# FIG 5

# FIG 6

# FIG 7